Europäisches Patentamt

European Patent Office

Office européen des brevets

(11) Veröffentlichungsnummer: **0 149 417**
A2

# EUROPÄISCHE PATENTANMELDUNG

(21) Anmeldenummer: 84730150.4

(22) Anmeldetag: 20.12.84

(51) Int. Cl.⁴: **B 60 B 39/06**

(30) Priorität: 20.12.83 DE 3346567
29.11.84 DE 3444007

(43) Veröffentlichungstag der Anmeldung:
24.07.85 Patentblatt 85/30

(84) Benannte Vertragsstaaten:
AT BE CH DE FR GB IT LI LU NL SE

(71) Anmelder: Radecki, Günther
Fritz-Erler-Allee 144
D-1000 Berlin 47(DE)

(72) Erfinder: Radecki, Günther
Fritz-Erler-Allee 144
D-1000 Berlin 47(DE)

(74) Vertreter: Lüke, Dierck-Wilm, Dipl.-Ing.
Gelfertstrasse 56
D-1000 Berlin 33(DE)

(54) Streuvo-richtung für die Fahrspuren eines Kraftfahrzeuges.

(57) Bekannte Streuvorrichtungen für die Fahrspuren von Kraftfahrzeugen weisen eine große Reibung entlang des Streugutförderweges auf, ermöglichen keine gezielte Dosierung des Streugutes und sind nicht schlagartig einsetzbar. Zur Behebung dieser Mängel sieht die Erfindung unmittelbar an den Streugutaustrittsöffnungen (12) angeordnete, motorisch angetriebene Streuräder (6) vor, die im Stillstand die Streugutaustrittsöffnungen (12) versperren und bei einer Drehbewegung die schlagartige Zuförderung von Streugut zu den Streugutaustrittsöffnungen (12) ermöglichen.

FIG.4

**0149417**

Albrecht & Lüke, Gelfertstr. 56, D-1000 Berlin 33

**Patentanwälte
Dipl.-Ing. Hans Albrecht** (1933/1979)
**Dipl.-Ing. Dierck-Wilm Lüke**
European Patent Attorney

Gelfertstraße 56
D-1000 Berlin 33
Telefon: (030) 8313028
Telegramme: Patentalbrecht Berlin

| Ihr Zeichen | Ihre Nachricht | Unser Zeichen | Datum |
|---|---|---|---|
| | | 10869 | 20. Dezember 1984 |

Günter Radecki, Fritz-Erler- Allee 144, 1000 Berlin 47

-------------------------------------------------------------

Streuvorrichtung für die Fahrspuren eines Kraftfahrzeuges

-------------------------------------------------------------

Die Erfindung bezieht sich auf eine Streuvorrichtung für die Fahrspuren eines Kraftfahrzeuges gemäß der Gattung des Anspruches 1.

Es ist bei einer Streuvorrichtung der gattungsgemäßen Art bekannt, in den Streugutkanälen als Streuguttransporteinrichtungen Schneckenförderer anzuordnen, welche das Streugut vom Streugutbehälter zu den Streugutaustrittsöffnungen fördern. Diese Schneckenförderer haben jedoch den Nachteil einer großen Reibung entlang des Förderweges für das Streugut zwischen dem Streugutbehälter und den Streugutaustrittsöffnungen, da das insbesondere granulatartige Streugut sich zwischen den Außenkanten der Schneckenförderer und den Innenflächen der Streugutkanäle festsetzen kann. Darüber hinaus ist keine gezielte Dosierung des Streugutes möglich. Ferner ist das Streugut nicht schlagartig einsetzbar, da es durch die Fahrzeugbewegungen aus

0149417

den Streugutkanälen über die Streugutaustrittsöffnungen herausrutschen kann und im Bedarfsfalle erst vom Streugutbehälter zu den Streugutaustrittsöffnungen gefördert werden muß.

Der Erfindung liegt von daher die Aufgabe zugrunde, eine Streuvorrichtung der gattungsgemäßen Art dahingehend weiterzubilden, daß unter Vermeidung einer großen Reibung der Streuguttransporteinrichtungen in den Streugutkanälen eine gezielte und dosierte Streugutzuförderung zu den Streugutaustrittsöffnungen möglich ist, wobei das Streugut im Bedarfsfall schlagartig einsetzbar sein soll.

Die Lösung dieser Aufgabe ergibt sich aus den kennzeichnenden Merkmalen des Anspruches 1. Die unmittelbar an den Streugutaustrittsöffnungen angeordneten, motorisch angetriebenen Streuräder sperren im Stillstand die Streugutaustrittsöffnungen und ermöglichen bei einer Drehbewegung die schlagartige Zuförderung von Streugut zu den Streugutaustrittsöffnungen. Die Streuräder benötigen nur eine äußerst geringe Antriebsenergie, insbesondere durch unmittelbar angeflanschte Elektromotoren, da die Reibung der Streuräder äußerst gering ist. Ständig befindet sich Streugut unmittelbar an den Streurädern, welche bei Betätigung unverzüglich und schlagartig das Streugut aus den Streugutaustrittsöffnungen auf die Fahrspuren des Kraftfahrzeuges unmittelbar vor den Rädern aufbringen.

Weitere Vorteile ergeben sich aus den Unteransprüchen, wobei insbesondere auf den Unteranspruch 9 hingewiesen wird. Die auf verzahnten Umlenkwalzen in den Streugutkanälen umlaufenden Umlaufförderbänder haben nur eine geringe Reibung an ihren Randbereichen innerhalb der Streugutkanäle. Die Oberseiten der Umlaufförderbänder führen innerhalb der Querriffelungen das Streugut, welches genau dosiert und schlagartig einsetzbar ist. Vor Antritt einer Fahrt werden die Umlaufförderbänder solange betrieben, bis aus den jeweiligen Streugutaustrittsöffnungen das Streugut austritt. Nach dem Abstellen der Umlaufförderbänder befindet sich dann unmittelbar oberhalb der Streugutaustrittsöffnungen auf den mit Querriffelungen versehenen Umlaufförderbändern eine ausreichende Menge an Streugut, welches bei Betätigung der Streugutvorrichtung unverzüglich und schlagartig ausgebracht werden kann, um die Fahrspuren des Kraftfahrzeuges unmittelbar vor den Rädern zu streuen. Ein Eindringen von Streugut in die Laufschienen wird durch beiderseitige Abflachung der Umlaufförderbänder und deren Eingriff in im Streugutkanal ausgebildete Laufschienen vermieden, womit auch eine Reibungsfreiheit erzielt wird.

Die Erfindung ist nachfolgend anhand mehrerer in den Zeichnungen dargestellter Ausführungsbeispiele näher erläutert. Es zeigen:

Fig. 1    die Seitenansicht eines Kraftfahrzeuges mit je einer Streuvorrichtung vor Vorder- und Hinterachse,

Fig. 2    eine Ansicht von vorn auf die vor den Rädern und oberhalb der Hinterachse angebrachte Streuvorrichtung,

Fig. 3    einen Querschnitt gemäß der Linie III-III in Fig. 2 durch den Streugutkanal parallel zur Achse des Streurades,

Fig. 4    einen Schnitt gemäß der Linie IV-IV in Fig. 2 durch den Streugutkanal senkrecht zur Achse des Streurades,

Fig. 5    einen Vertikalschnitt durch den Streugutkanal in der zweiten Ausführungsform,

- 4 -

0149417

Fig. 6  eine teilweise geschnitten dargestellte Draufsicht auf den Streugutkanal in der dritten Ausführungsform,

Fig. 7  die Seitenansicht eines Kraftfahrzeuges mit der Anordnung von zwei Streuvorrichtungen in der vierten Ausführungsform vor den Rädern der Vorder- und Hinterachse,

Fig. 8  eine Ansicht von vorn auf die vor der Vorderachse angebrachte Streuvorrichtung in der vierten Ausführungsform,

Fig. 9  einen Querschnitt gemäß der Linie IX-IX in Fig. 8 durch den Streugutkanal im Bereich einer Umlenkwalze und

Fig. 10 einen Querschnitt gemäß der Linie X-X in Fig. 8 durch den Streugutkanal im Bereich einer Perlenstange zur Abstützung des Obertrumms des Umlaufförderbandes.

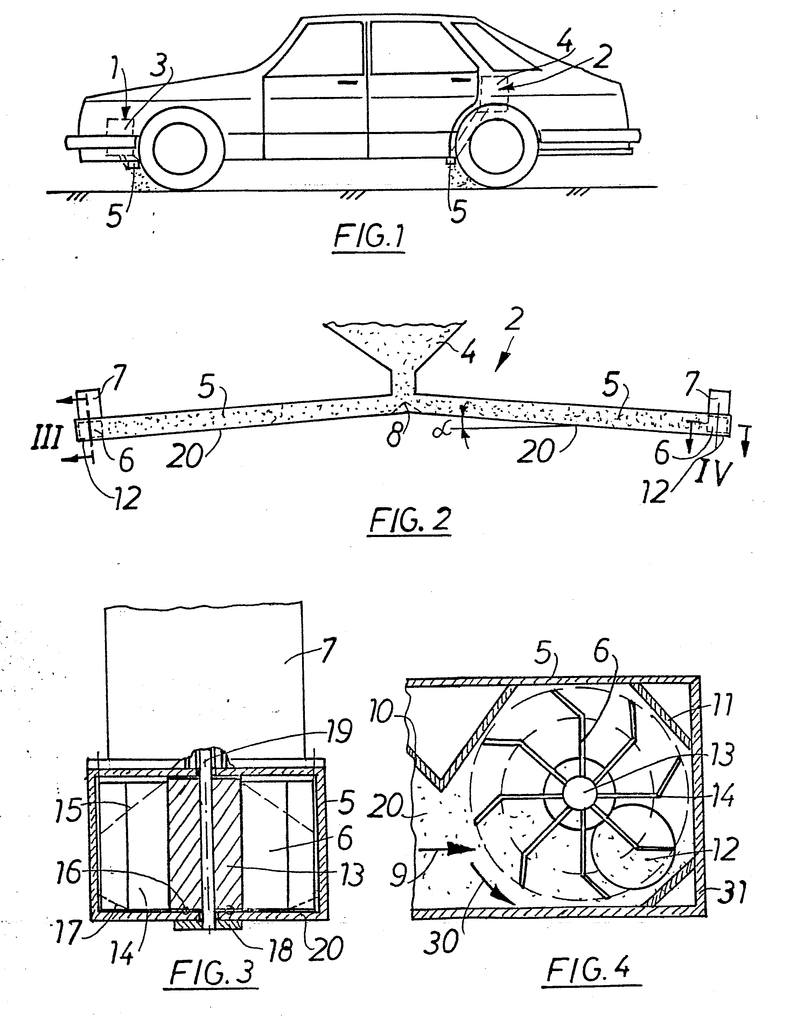

Das in Fig. 1 dargestellte Kraftfahrzeug weist vor den Rädern der Vorder- und Hinterachse je eine Streuvorrichtung 1,2 auf. Die vor den Rädern der Vorderachse des Kraftfahrzeuges angeordnete Streuvorrichtung 1 kann im wesentlichen innerhalb des Motorraums angeordnet und befestigt sein. Die vor den Rädern der Hinterachse angeordnete Streuvorrichtung 2 ist in nicht näher dargestellter Weise im wesentlichen unter dem Rücksitz und oberhalb der Radachse des Hinterrades angebracht .

Die Streuvorrichtung 2 besteht gemäß Fig. 2 aus einem Streugutbehälter 4 mit zwei Streugutkanälen 5, welche an ihren freien Enden geschlossen sind und dort je ein Streurad 6 und einen angeflanschten Elektromotor 7 aufweisen. Im Drehbereich der Streuräder 6 sind Streugutaustrittsöffnungen 12 in die Bodenfläche 20 der Streugutkanäle 5 eingebracht, aus welchen das Streugut vor die Hinterräder des Kraftfahrzeuges gefördert werden kann.

Zur guten Verteilung des aus dem Streugutbehälter 4 in die beiden Streugutkanäle 5 strömenden Streugutes ist unterhalb des Streugutbehälters 4 ein dachförmiger Streugutverteiler 8 auf die Bodenfläche 20 der Streugutkanäle 5 aufgesetzt.

Das Streugut fließt durch die schräg nach unten verlaufenden Streugutkanäle 5 auf deren Bodenfläche 20 in Richtung des Pfeiles 9 zu den Streurädern 6. Unmittelbar vor diesen ist eine in der Draufsicht auf die Bodenfläche 20 V-förmige Wand 10 angeordnet, welche den Streugutkanal 5 zur Führung des Streugutes verengt. In den Ecken der durch Stirnwände 31 geschlossenen Streugutkanäle 5 sind unter 45° Eckwände 11 befestigt, welche zusammen mit der V-förmigen Wand 10 das Streurad 6 umgeben.

Das Streurad 6 ist mit seinem Drehbereich oberhalb der Streugutaustrittsöffnung 12 auf einer Drehachse 13 gelagert, welche wiederum die Achse 19 des Elektromotors 7 aufnimmt. Die Drehachse 13 des Streurades 6 ist gleichzeitig der Aufnahmekörper für die einzelnen Streuflügel 14 des Streurades, welche in Drehrichtung (Pfeil 30) nach vorne abgewinkelt sind, wie es in Fig. 4 dargestellt ist. In der bevorzugten Ausführungsform erstrecken sich die Flügel 14 des Streurades 6 von der Bodenfläche 20 bis zur oberen Wand des Streugutkanales 5. In einer alternativen Ausführungsform können die Oberseiten des Streurades 6 abgeschrägt sein, wie es in Fig. 3 durch die gestrichelten Linien 15 dargestellt ist. Die Drehachse 13 des Streurades 6 kann auf der Bodenfläche 20 über Kugellager 16 abgestützt sein. Ferner kann die Bodenfläche 20 des Streugutkanales 5 mit einem tellerförmigen Einsatz versehen sein, der in Fig. 3 mit gestrichelten Linien 17 dargestellt ist, wobei gleichzeitig auch die einzelnen Flügel 14 des Streurades 6 entsprechend ausgebildet sind. Die Achse 19 des Elektromotors 7 ist in einem Flansch 18 gelagert, welcher außen auf den Streugutkanal 5 aufgesetzt ist.

Durch die Neigung der Streugutkanäle 5 unter dem Winkel $\alpha$ ( Fig.2) gegen die Horizontale wird das Streugut ständig aufgrund der Erschütterungen des Kraftfahrzeuges im Fahrbetrieb vom Streugutbehälter 4 über die Streugutkanäle 5 den Streurädern 6 zugeführt. Diese versperren jedoch im Ruhezustand den Austritt aus den in den Bodenflächen 20 der Streugutkanäle 5 angebrachten Streugutaustrittsöffnungen 12. Unter dem Drehantrieb der Elektromotoren 7 werden die Streuräder 6 in Richtung des Pfeiles 21 gedreht, wodurch das Streugut aus den Streugutkanälen 5 abgezogen wird und aus den Ausfallöffnungen 12 unmittelbar vor die Räder des Kraftfahrzeuges fällt.

Die in Fig. 2 und 3 oberhalb der Streugutkanäle 5 angebrachte Elektromotoren 7 können auch unterhalb der Streugutkanäle 5 angeflanscht sein.

Die vor den Vorderrädern angebrachte Streuvorrichtung 1 kann aus zwei einzelnen Streugutkanälen 5 mit je einem zugeordneten Streugutbehälter 4 gebildet sein, so daß nur kurze Streugutkanäle 5 benötigt werden.

Die Antriebsmotoren für die vor den Vorderrädern angeordnete Streuvorrichtung 1 können getrennt von den Antriebsmotoren 7 für die Streuvorrichtung 2 der Hinterräder einschaltbar sein, wobei letztere zuerste und erstere dann anschließend eingeschaltet werden. Bei eingeschalteten Elektromotoren 7 kann eine akustische oder visuelle Anzeigeeinrichtung im Kraftfahrzeug betätigt werden.

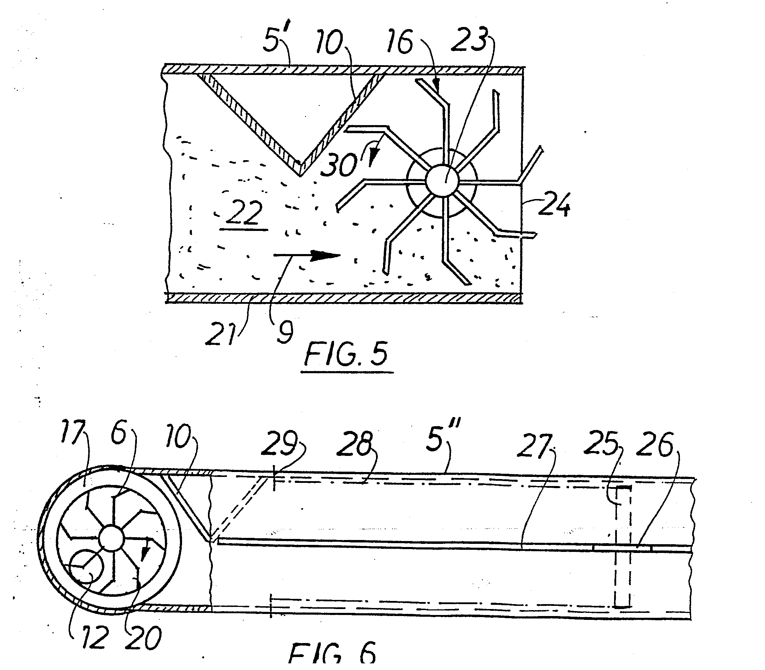

Bei der in Fig. 5 dargestellten zweiten Ausführungsform ist die Drehachse 23 des Streurades 16 parallel zur Bodenfläche 21 des Streugutkanales 5 angeordnet und in den Seitenwänden 22 des Streugutkanales 5 gelagert, dessen offenes freies Ende die Streugutaustrittsöffnung 24 bildet.

Bei der in Fig.6 dargestellten dritten Ausführungsform ist links der tellerförmige Einsatz 17 im Streugutkanal 5'' dargestellt . Auf der Bodenfläche 20 dreht sich das Streurad 6 oberhalb der Streugutaustrittsöffnung 12 in Richtung des Pfeiles . Der Streugutkanal 5'' besitzt in seinem Innenraum einen Schieber 25 , der mittels zweier Zugelemente 28 in Richtung auf das Streurad 6 vorgespannt ist . Als Zugelemente können Seilzüge , Gummibänder oder Federn dienen . Der Schieber 25 ist mittels einer Kulissenführung im Kanal 5'' geführt , welche aus einer Nut 27 in der Oberwand des Kanals 5'' und einer in dieser geführten Kulisse 26 gebildet ist . Zum Einfüllen des Streusandes vor den Schieber 25 ist der Kanal 5'' im Bereich der Mitte oben offen , welche durch den Streugutverteiler 8 (Fig. 2) gebildet wird . Die Zugelemente 28 sind in den Befestigungsstellen 29 an der Kanalwandung festgelegt oder dort aus dem Kanal 5'' herausgeführt .

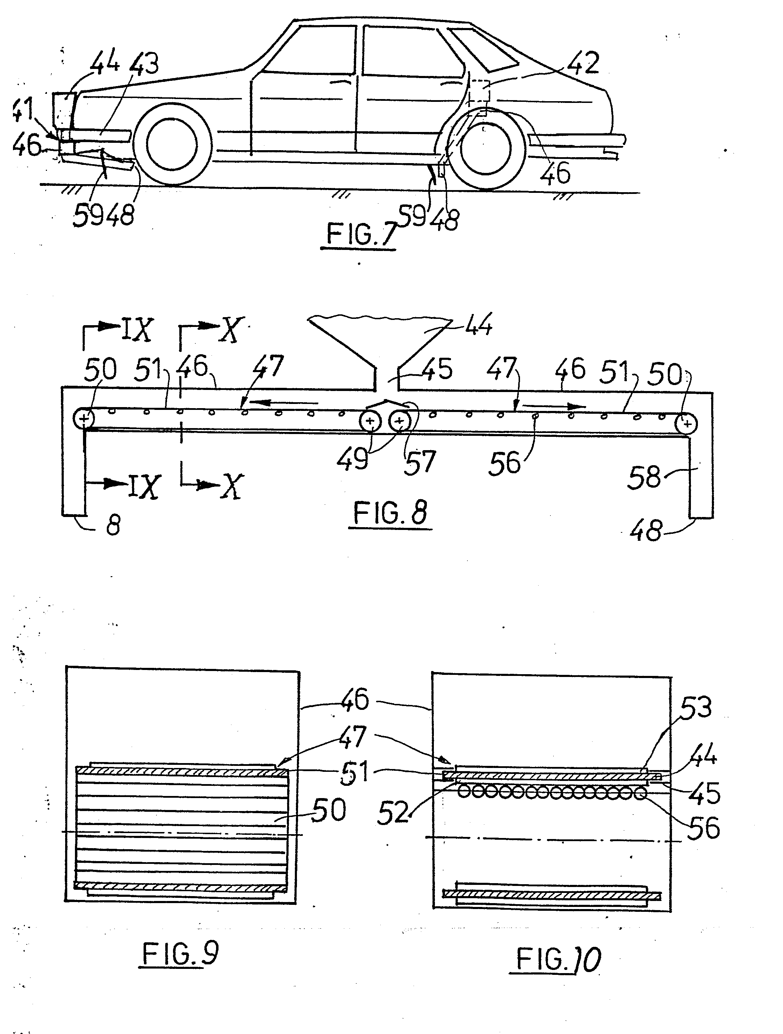

Das in Fig. 7 dargestellte Kraftfahrzeug weist vor den Rädern der Vorder- und der Hinterachse je eine Streuvorrichtung 41,42 auf. Die vor den Rädern der Vorderachse des Kraftfahrzeuges angeordnete Streuvorrichtung 41 kann abnehmbar in oder unter der vorderen Stoßstange 43 des Kraftfahrzeuges in nicht näher dargestellter Weise befestigt sein. Die Streuvorrichtung 42 ist in das Kraftfahrzeug integriert, wobei der Streugutbehälter 44 in nicht näher dargestellter Weise hinter der Rückenlehne der Rücksitze des Kraftfahrzeuges angebracht ist.

Jede Streuvorrichtung 41,42 besteht gemäß Fig. 8 aus einem Streugutbehälter 44 mit einem Streugutaustritt 45, der regelmäßig etwa in der Längsmittelachse des Kraftfahrzeuges angeordnet ist, sowie zwei sich quer zur Fahrzeugslängsachse erstreckenden Streugutkanälen 46 mit innerhalb derselben angeordneten Streuguttransporteinrichtungen 47 und am Ende der Streugutkanäle 46 angebrachten Streugutaustrittsöffnungen 48, welche jeweils vor den Rädern einer jeden Achse des Kraftfahrzeuges angeordnet sind.

Jeder Streugutkanal 46 ist im Querschnitt quadratisch mit Kantenabmessungen von etwa 55 mm ausgebildet. Unterhalb des Streugutaustrittes 45 aus dem Streugutbehälter 44 und am Ende eines jeden Streugutkanales 46 sind Umlenkwalzen 49,50 angebracht, deren äußere Umfangsfläche achsparallel verzahnt ist. Um die Umlenkwalzen 49,50 laufen gegenläufig Endlosförderbänder 51 um , welche auf der Unterseite zum Eingriff in die verzahnten Umlenkwalzen 49,50 mit einer Querverzahnung 51 und auf der Oberseite mit einer Querriffelung 13 versehen sind, die zum Transport des Streugutes dient. Jedes Umlaufförderband 51 hat beidseits flache, nicht verzahnte bzw. nicht geriffelte Randbereiche 54 zum Eingriff in laufschienen 55 , welche im Streugutkanal 46 ausgebildet sind. Unterhalb des Obertrumms eines jeden Umlaufförderbandes 51, erstrecken quer durch den Streugutkanal 46 Perlenstangen 56, welche auf im Streugutkanal 46 gespannten Drähten aufgefädelt sind und welche dem Obertrumm des Förderbandes 51 mit der darauf liegenden Streugutlast tragen.

Als Streugutaustrittsöffnungen 48 sind unterhalb der am Ende der Streugutkanäle 46 angebrachten Umlenkwalzen 50 biegsame Schläuche 58 angeordnet, deren Querschnitt etwa 40 mm beträgt.

Die unterhalb des Streugutaustrittes 45 nebeneinander angeordneten Umlenkwalzen 49 sind mittels eines gemeinsamen, nicht näher dargestellten Antriebes gegenläufig antreibbar und durch ein dachförmiges Streugutverteilblech 57 überdeckt. Der Antriebsmotor für die Antriebs- Umlenkwalzen 49 muß nicht in der Fahrzeuglängsmitte angebracht sein, sondern kann die Antriebs-

Umlenkwalzen 49 über einen Kettentrieb antreiben. Auch der Streugutbehälter 44 muß nicht über den Antriebs-Umlenkwalzen 49 angebracht sein, sondern kann zu einer Fahrzeugseite hin versetzt sein. Nur der Streugutaustritt 45 muß dann über einen Verbindungsschlauch mit dem Streugutbehälter 44 verbunden sein.

Jede Streuvorrichtung ist von einem nicht dargestellten, im Bereich des Fahrers angebrachten Schaltelement einschaltbar. Vor Antritt einer Fahrt wird jede Streuvorrichtung 41,42 betätigt, bis Streugut aus den Schläuchen 58 austritt. Dann werden die Streuvorrichtungen 41,42 abgeschaltet. Das Streugut befindet sich dann innerhalb der Querriffelungen der Umlaufförderbänder 47 unmittelbar vor den Austritts- Umlenkwalzen 50. Bei Bedarf kann somit während der Fahrt unter Betätigung des im Bereich des Fahrers befindlichen Schaltelementes jede Streuvorrichtung 41,42 eingeschaltet werden, woraufhin das Streugut schlagartig in die Fahrspuren des Kraftfahrzeuges eingebracht wird. Hierdurch kann die Wirkung der Räder auf vereister Fahrbahn sowohl beim Bremsen als auch beim Anfahren gesichert werden.

Als Streugut kann ein Quarzsand verwendet werden, der mit Blähton vermischt ist. Es kann auch ein gesiebtes Granulat verwendet werden. Die Streugutaustrittsöffnungen 48 sind mit in Fahrtrichtung vor diesen angebrachten Schmutzfängern 59 ( Fig. 7 ) versehen , welche eine Verwirbelung des aus den biegsamen Schläuchen 58 austretenden Streuguts verhindern sollen.

Anstelle eines gemeinsamen, zentralen Antriebs für beide Umlauf-förderbänder 51 mit einem Streugutbehälter 44 können auch getrennt angetriebene Förderbänder mit getrennten Streugutbehältern verwendet und jeweils seitlich in Hohlräume des KFZ eingebaut werden .

Die Streuvorrichtungen in der ersten und dritten Ausführungsform gemäß den Fig. 4 bzw. 6 können mit dem tellerförmigen Einsatzteil 17 gemäß 6 versehen sein , welches das Streurad 6 umgibt. Das Einsatzteil 17 hat schräg zum Streurad 6 hin geneigte Wände , wie es in Fig.3 gestrichelt dargestellt ist . Hierdurch bildet das Einsatzteil 17 einen Speicher für das Streugut , welches radial infolge der Schwerkraft dem Streurad 6 zufließt . Andererseits kann überschüssiges Streugut vom Streurad 6 auf den tellerförmigen Einsatz 17 verdrängt werden und später nachfließen , da das Einsatzteil 17 im wesentlichen horizontal angeordnet ist .

0149417

Albrecht & Lüke, Gelfertstr. 56, D-1000 Berlin 33

Patentanwälte
Dipl.-Ing. Hans Albrecht ($^{1933}_{1979}$)
Dipl.-Ing. Dierck-Wilm Lüke
European Patent Attorney

Gelfertstraße 56
D-1000 Berlin 33
Telefon: (030) 8313028
Telegramme: Patentalbrecht Berlin

| hr Zeichen | Ihre Nachricht | Unser Zeichen | Datum |
|---|---|---|---|
|  |  | 10869 | 20 . Dezember 1984 |

P a t e n t a n s p r ü c h e
----------------------------------------

1. Streuvorrichtung für die Fahrspuren eines Kraftfahrzeuges, aus einem Streugutbehälter, zwei von diesem ausgehenden Streugutkanälen mit Streuguttransporteinrichtungen und je einer vor den Rädern einer Fahrzeugachse angebrachten Streugutaustrittsöffnung,
d a d u r c h   g e k e n n z e i c h n e t,
daß jede Streuguttransporteinrichtung aus einem die Streugutaustrittsöffnung (12) des Streugutkanales (5) überdeckenden, motorisch angetriebenen Streurad (6) gebildet ist.

2. Streuvorrichtung nach Anspruch 1, dadurch gekennzeichnet, daß die Drehachse (13) des Streurades (6) senkrecht zur Bodenfläche (20) des am Ende geschlossenen Streugutkanals (5) und die Streugutaustrittsöffnung (12) in der Bodenfläche (20) des Streugutkanales (5) im Drehbereich des Streurades (6) angeordnet sind.

3. Streuvorrichtung nach Anspruch 2, dadurch gekennzeichnet, daß das Streurad (6) als Flügelrad mit in Drehrichtung (Pfeil 30 ) nach vorne abgewinkelten Streuflügeln (14) ausgebildet ist.

- 2 -

4. Streuvorrichtung nach einem der Ansprüche 1 bis 3 , dadurch gekennzeichnet, daß der Boden (17) des Streugutkanales (5) im Bereich des Streurades (6) trichterförmig und das Streurad (6) kegelförmig ausgebildet sind.

5. Streuvorrichtung nach einem der Ansprüche 1 bis 4 , dadurch gekennzeichnet, daß das Streurad (6) durch am Boden (5) unter dem Radachskörper (13) des Streurades (6) gelagerte Kugellager (16) abgestützt ist.

6. Streuvorrichtung nach Anspruch 1, dadurch gekennzeichnet, daß die Drehachse (23) des Streurades (16) parallel zur Bodenfläche (21) angeordnet und in den Seitenwänden (22) des Streugutkanales (5) gelagert ist, dessen offenes, freies Ende die Streugutaustrittsöffnung (24) bildet.

7. Streuvorrichtung nach einem der Ansprüche 1 bis 6 , dadurch gekennzeichnet, daß das Streurad (6,16) mittels eines am Streugutkanal (5) angeflanschten Elektromotors (7) angetrieben ist, dessen Achse (19) mit dem Radachskörper (13) des Streurades (6,16) drehfest verbunden ist.

8. Streuvorrichtung nach einem der Ansprüche 1 bis 7 , dadurch gekennzeichnet , daß im Streugutkanal (5'') ein Schieber (25) mittels einer Kulissenführung (26,27) gelagert und mittels zweier Zugelemente (28) in Richtung auf das Streurad (6) vorgespannt ist .

9. Streuvorrichtung für die Fahrspuren eines Kraftfahrzeuges, aus einem Streugutbehälter, zwei von diesem ausgehenden Streugutkanälen mit Streuguttransporteinrichtungen und je einer vor den Rädern einer Fahrzeugachse angebrachten Streugutaustrittsöffnungen, dadurch gekennzeichnet, daß jede Streuguttransporteinrichtung aus einem endlosen Umlaufförderband (47) gebildet ist, dessen Unterseite zum Eingriff in verzahnte Umlenkwalzen (49,50) mit einer Querverzahnung (52) und dessen Oberseite zum gezielten Transport ener dosierbaren Streugutmenge mit einer Riffelung, insbesondere Querriffelung (53) versehen sind.

10. Streuvorrichtung nach Anspruch 9, dadurch gekennzeichnet, daß das Umlaufförderband (47) beidseits flache, nicht verzahnte bzw. nicht geriffelte Randbereiche (54) zum Eingriff in im Streugutkanal (46) ausgebildete Laufschienen (55) aufweist.

11. Streuvorrichtung nach Anspruch 10 oder 11, dadurch gekennzeichnet, daß der Obertrumm (51) des Umlaufförderbandes (47) auf Perlenstangen (56) abgestützt ist, die sich quer durch den Streugutkanal (46) erstrecken.

12. Streuvorrichtung nach einem der Ansprüche 9 bis 11, dadurch gekennzeichnet, daß die Streugutaustrittsöffnungen (48) der Streugutkanäle (46) aus unterhalb der am Ende der Umlaufförderbänder (47) angeordneten Umlenkwalzen (50) angebrachten biegsamen Schläuchen (58) gebildet sind.

13. Streugutvorrichtung nach einem der vorangegangenen Ansprüche, dadurch gekennzeichnet, daß am Anfang der Umlaufförderbänder (47) nebeneinander angeordnete Umlenkwalzen (49) mittels eines Antriebes antreibbar sind.

14. Streuvorrichtung nach Anspruch 14, dadurch gekennzeichnet, daß unterhalb des Streugutaustrittes (45) aus dem Streugutbehälter (44) auf die Umlaufförderbänder (47) und oberhalb
derselben ein dachförmiges Streugutverteilblech (57) angeordnet ist.

_FIG.1_

_FIG. 2_

_FIG.3_

_FIG.4_

5'  10  16  23

30

22

24

21  9  _FIG. 5_

17  6  10  29  28  5"  27  25  26

12  20

_FIG. 6_

FIG.7

FIG.8

FIG.9

FIG.10